# EUROPEAN PATENT SPECIFICATION

(11) **EP 2 647 167 B1**
(45) Date of publication and mention of the grant of the patent: **10.01.2018**
(21) Application number: 10784527.3
(22) Date of filing: 30.11.2010
(51) Int. Cl.: H04L 29/06, H04L 12/28, H04N 21/2747, H04N 5/76, H04N 9/79, H04N 21/436, H04N 21/472

(54) **RECORDING IN A LOCAL NETWORK**
AUFZEICHNUNG IN EINEM LOKALEN NETZWERK
ENREGISTREMENT DANS UN RÉSEAU LOCAL

(43) Date of publication of application: 09.10.2013
(73) Proprietor: Telefonaktiebolaget LM Ericsson (publ), 164 83 Stockholm (SE)
(72) Inventor: WOXBLOM, Mikael, S-125 42 Älvsjö (SE); ERMIS, Olof, 72461 Västeras (SE)
(74) Representative: Brann AB
(86) International application number: PCT/EP2010/068479
(87) International publication number: WO 2012/072105

(56) References cited:
- US-A1- 2009 245 758
- US-A1- 2010 036 907

## Description

### TECHNICAL FIELD

The present invention relates to methods for a remote-media storing device of a local network, and for a media aggregating node connected to the remote-media storing device, of recording broadcasted/multicasted media content. The invention also relates to a remote-media storing device and to a media aggregating node.

### BACKGROUND

A local network, e.g. a home network or an office network, may comprise several connected consumer electronic devices, e.g. personal computers, mobile phones, set-top-boxes and gaming consoles. Electronic devices within a local network may be adapted to communicate with each other e.g. according to DLNA (Digital Living Network Alliance) standard, which allows consumer electronic devices to communicate and share media content with each other within the same DLNA network. Thereby, a TV could access e.g. media files residing on a PC, without any complicated configuration process, if the TV and the PC belong to the same DLNA home network.

A DLNA-compatible device is able to communicate with other DLNA-compatible devices within a DLNA network via a Universal Plug and Play (UPnP), which is a network-protocol that is capable of establishing communication between DLNA-compatible devices within a DLNA network, without any configuration. By means of the UPnP, a DLNA device is able to e.g. discover and address other available DLNA devices within a DLNA network, and receive a description of their capabilities.

The DLNA-compatible devices within a DLNA network are typically of different types, based on their function in the media distribution and rendering, and the types involve a DMS (Digital Media Storage/Server), a DMP (Digital Media Player), a DMR (Digital Media Renderer), and a DMC (Digital Media Controller).

Further, a media aggregating node, e.g. a so-called Media Fabric connected to an external network could be connected to a local network, such as e.g. the above-mentioned DLNA network, via a gateway. The media aggregating node handles media content from media providers of the external network, outside the local network, as well as metadata from data servers of the external media providers. A media aggregating node is further responsible e.g. for authenticating a user, and for processing requests and presence messages.

A DMS of the local network may be e.g. a PC (Personal Computer) or a NAS (Network Attached Storage), and it is a device that stores local media content and makes it available to a DMP or DMR. A DMP may be e.g. a TV, a stereo, a game console, or a mobile phone, and is a device that is able to browse a DMS in order to display a media playlist, and provide playback and rendering capabilities of user-selected media content. Further, a DMC is also able to browse the DMS, and play selected content on a DMR, and a DMC may be e.g. a PDA (Personal Digital Assistant) or a mobile phone. Finally, a DMR is a device that is able to play content received through a link from a DMC, and a DMR may be a TV, an audio/video receiver, a video display or remote speakers.

Thus, in a conventional local network, e.g. a DLNA network, a media playing device, e.g. a DMP, is able to obtain a media playlist from a DMS, and play the media content of a link, e.g. an URL (Uniform Resource Locator) obtained from the DMS. Further, a media controlling device, e.g. a DMC, is also able to obtain a list of available media content from a DMS, and send a link obtained from the DMS to a media rendering device, e.g. a DMR, wherein the media rendering device is able to connect to the link, e.g. an URL, and play the media. However, presently it is not possible to record live broadcasted media content.

Related art within this technical field is disclosed e.g. in US 2009/0245758, which describes a video recording system comprising a first and a second video recording apparatus that are connected to each other via a local network.

### SUMMARY

The object of the present invention is to address at least some of the issues outlined above, and this object and others are achieved by the method and the arrangement according to the appended independent claims, and by the embodiments according to the dependent claims.
According to a first aspect, a method is provided for a remote-media storing device in a local network of recording broadcasted/multicasted media content according appended claim 1. The recording is triggered by a media playing device of the local network, and the remote-media storing device is connected to a media aggregating node outside the local network. The method comprises the remote-media storing device requesting the media aggregating node to retrieve a media playlist of available media, and receiving the playlist. Further, the remote-media storing device forwards the playlist as a recording playlist to a browsing media playing device, the playlist comprising associations to the media, receives a request with an association to user-selected media from the media playing device, wherein the media is selected by a play-input to the media playing device, and forwards to the media aggregating node as a request with an association indication a recording of said media.
According to a second aspect, a method is provided for a media aggregating node connected to a remote-media storing device of a local network of recording broadcasted/multicasted media according appended claim 4. The recording is triggered by a media playing device of the local network, and the method comprises the media aggregating node retrieving a media playlist of available media, and forwards the playlist to the remote-media storing device, in response to a request. The playlist comprises associations to the media and is forwarded as a recording playlist to the media playing device browsing the remote-media storing device. Further, the media aggregating node receives a request with an association indicating a recording of user-selected media, wherein the media is selected by a play-input to the media playing device. The media aggregating node eventually retrieves and records a user-selected media stream.
According to a third aspect, a remote-media storing device is provided that is connectable to a local network and is arranged to record broadcasted/multicasted media content on a media aggregating node outside the local network according appended claim 7. The recording is triggered by a media playing device of the local network, and the remote-media storing device comprises a communication unit and processing circuits. The remote-media storing device is configured to request the media aggregating node to retrieve a media playlist of available media, to receive the playlist, and to forward the playlist as a recording playlist to a browsing media playing device, the playlist comprising associations to the media. The remote-media storing device is further configured to receive a request with an association to user-selected media from the media playing device, the media selected by a play-input to the media playing device, and to forward to the media aggregating node as request with an association indicating a recording of said media.
According to a fourth aspect, a media aggregating node is provided that is arranged to record broadcasted/multicasted media according appended claim 12. The recording is triggered by a media playing device of a local network, and the media aggregating node is connectable to a remote-media storing device of the local network. The media aggregating node comprises a communication unit and processing circuits. The media aggregating node is configured to retrieve a media playlist of available media and forward the playlist to the remote-media storing device, in response to a request, wherein the playlist is forwarded as a recording playlist to the media playing device browsing the remote-media storing device, the playlist comprising associations to the media. The media aggregating node is further configured to receive a request with an association indication a recording of user-selected media, the media selected by a play-input to the media playing device, and to retrieve and record a user-selected media stream.

According to exemplary embodiments, the local network is a DLNA-network, in which the devices are communicating by the UPnP.

An advantage with the embodiments is to enable a media playing device of a local network to trigger a recording of user-selected live broadcasted media content. An advantage with the embodiments, in which the local network is a DLNA network, is that the conventional UPnP may be used for communication between the devices.

### BRIEF DESCRIPTION OF THE DRAWINGS

Exemplary embodiments of the invention will now be described in more detail, and with reference to the accompanying drawings, in which:
- Figure 1 schematically illustrates an exemplary DLNA network connected to a media aggregating node of an external network, via a gateway;
- Figure 2a and 2b are exemplary signalling diagram illustrating a DMP triggering recording of broadcasted media content on a media aggregating node;
- Figure 3a and 3b are exemplary signalling diagrams illustrating display of user selected recorded media on a DMP;
- Figure 4 is a flow diagram schematically illustrating an rDMS recording broadcasted media content on a media aggregating node;
- Figure 5 is a flow diagram schematically illustrating an rDMS forwarding recorded media for play-out on the DMP;
- Figure 6 is a flow diagram schematically illustrating a media aggregating node recording broadcasted media content;
- Figures 7a and 7b are flow diagrams schematically illustrating a media aggregating node sending recorded media for play-out on a DMP;
- Figure 8 schematically illustrates an exemplary remote-media storing device; and
- Figure 9 schematically illustrates an exemplary media aggregating node.

### DETAILED DESCRIPTION

In the following description, the invention will be described in more detail with reference to certain embodiments and to accompanying drawings. For purposes of explanation and not limitation, specific details are set forth, such as particular scenarios, techniques, etc., in order to provide a thorough understanding of the present invention. However, it is apparent to one skilled in the art that the present invention may be practised in other embodiments that depart from these specific details.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as in a system comprising a computer processor and a memory coupled to the processor, wherein the memory is encoded with one or more programs that may perform the functions disclosed herein.

In the following, the term **local network** may indicate e.g. a DLNA-network, but the embodiments are not limited thereto. An **external network** indicates a network outside the local network, e.g. the Internet, but the embodiments are is not limited thereto.

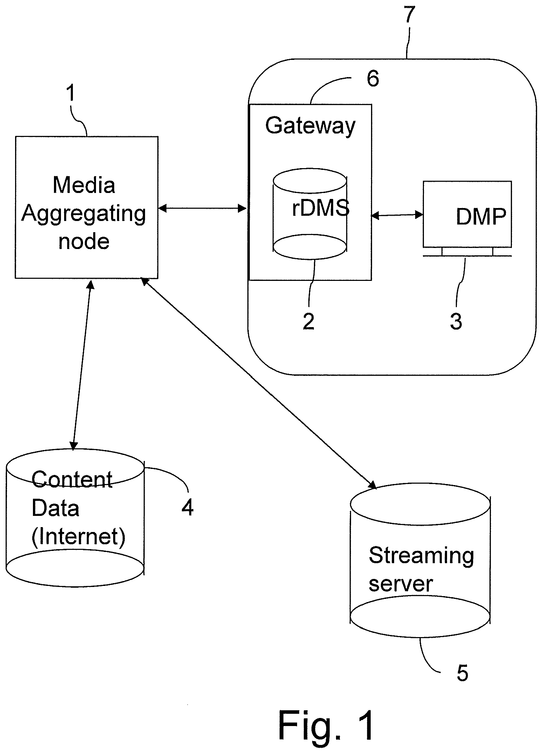

Figure 1 illustrates an exemplary local network 7, i.e. a DLNA network, further comprising another type of device, which is hereinafter referred to as an rDMS (remote Digital Media Storage/Server), which basically corresponds to a remotely (externally) connectable DMS. However, an rDMS is not a standardized type of DLNA device. The rDMS is able to make external media content available to a DMP or a DMC of the local network by fetching information of available external media from the media aggregating node, and send to a browsing DMP or DMC.

The network illustrated in figure 1 comprises an above-mentioned rDMS (remote Digital Media Storage/Server) 2 that is included in a gateway 6 and connected to a media aggregating node 1 of en external network, e.g. the Internet. The DLNA network further comprises a DMP (Digital Media Player) 3 that is capable of browsing the rDMS to obtain information, e.g. a media playlist, from the media aggregating node, and start playing a media content selected from the playlist, via a link included in the playlist. The rDMS is able to obtain the media information indicating available external media from the media aggregating node, and forward to a browsing DMP for display, typically in the form of tree structure. The media aggregating node 1 obtains available media titles for the playlist, as well as the links, e.g. URLs, to the respective media file from media content data servers 4 associated with external media providers. Further, the media aggregating node is able to retrieve the live media stream from streaming servers 5.

According to exemplary embodiments of recording live broadcasted media content, as described hereinafter, a media playing device 3 of a local network 7, e.g. a DMP in a DLNA network, as illustrated in figure 1, is able to trigger a recording of live broadcasted media content on a media aggregating node 1 of an external network, i.e. outside the local network. The media playing device browses a remote-media storing device 2, e.g. an rDMS of a DLNA network, in order to obtain a playlist of available external media that will be broadcasted, and the remote-media storing device retrieves a media playlist from the media aggregating node. The remote-media storing device forwards the media playlist as a recording playlist to the browsing media playing device, and the playlist comprises associations to the media on the playlist, e.g. an URL, or any other appropriate reference information. Next, the remote-media storing device receives a request with an association to a user-selected media, e.g. an HTTP URL request, from the media playing device, and forwards to the media aggregating node as a request with an association indicating a recording of the user-selected media, the association being e.g. a link to the media. However, according to an alternative embodiments, the media aggregating node receives a request with an association indicating a recording of the user-selected media directly from the media playing device.

The media aggregating node has retrieved the media playlist from a media content data server 4, and forwarded the playlist to the remote-media storing device, the playlist comprising associations to available media. Upon receiving a request with an association indicating a recording of user-selected media content from the remote-media storing device, or directly from the media playing device, the media aggregating node retrieves and records said user-selected external live broadcasted media content from a streaming server 5. The media aggregating node will retrieve and record the media content at the time of the broadcasting, which may be immediately after receiving the recording-command, or after time interval, e.g. after a few hours or a few days.

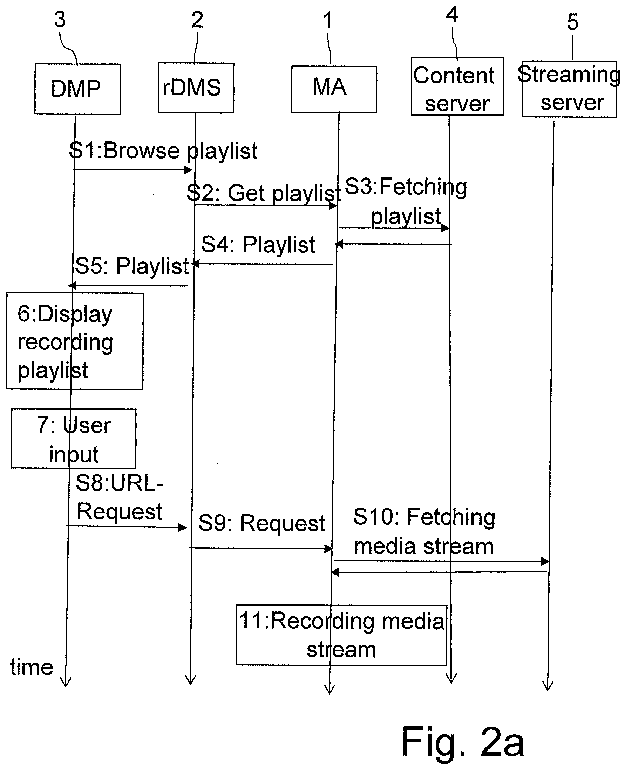

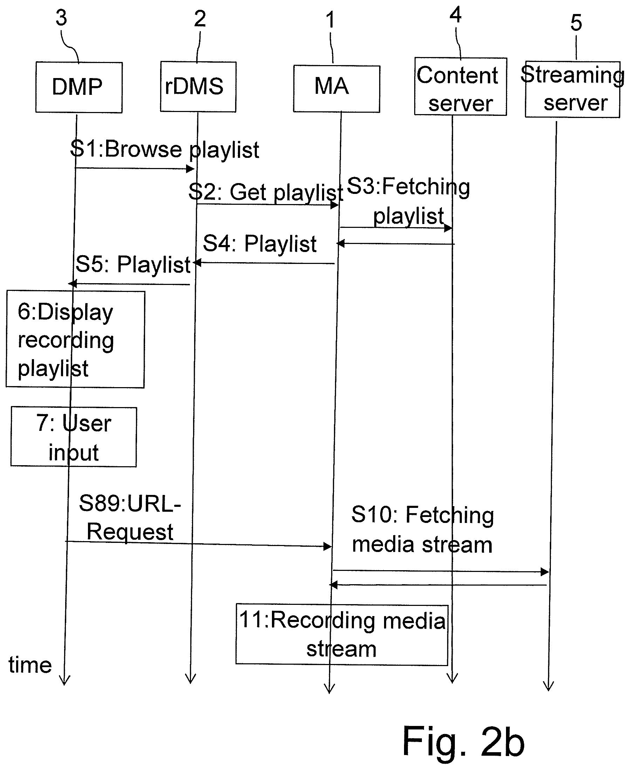

Figure 2a and 2b are signalling diagram illustrating an exemplary recording of broadcasted media content on a media aggregating node, triggered by a media playing device of a local network, according to two alternative embodiments. According to both of the illustrated embodiments, the local network is a DLNA network. In the figure, a DMP 3 of the DLNA network browses an rDMS 2 of the DLNA network in order to obtain a playlist of available broadcasted media, in signal S1. The rDMS sends a request to a connected MA (media aggregating node) 2 for a playlist, and the MA fetches data from one or more media content data servers 4 for creating a playlist, in signal S3, the playlist comprising associations to the media on the list. Next, the MA forwards a playlist to the rDMS, in signal S4, and the rDMS forwards it to the browsing DMP for display as a recording playlist, in signal S5. In step 6, the DMP displays the playlist to the user as a recording playlist, the playlist comprising associations, e.g. URLs, to the media content, and receives a play-input from the user regarding user-selected media content, in step 7. According to the first alternative embodiment, as illustrated in figure 2a, the DMP sends a request including an association to the user-selected media, e.g. an URL Request, to the rDMS in signal S8, and the rDMS forwards a request to the media aggregating node, in signal S9, the request including an association indicating a recording of said media to the media aggregating node. According to a second alternative embodiment, as illustrated in figure 2b, the DMP sends a request including an association to the user-selected media, e.g. an URL Request, directly to the media aggregating node, in signal S89, the request including an association indicating a recording of said media to the media aggregating node. Next, in both the embodiments, the media aggregating node will interpret the request as a command to record the user-selected media. Thus, on the starting time of the broadcasting of the user-selected media, the media aggregating node retrieves the media stream, in signal S10 from a streaming server, and records the media stream, in step 11.

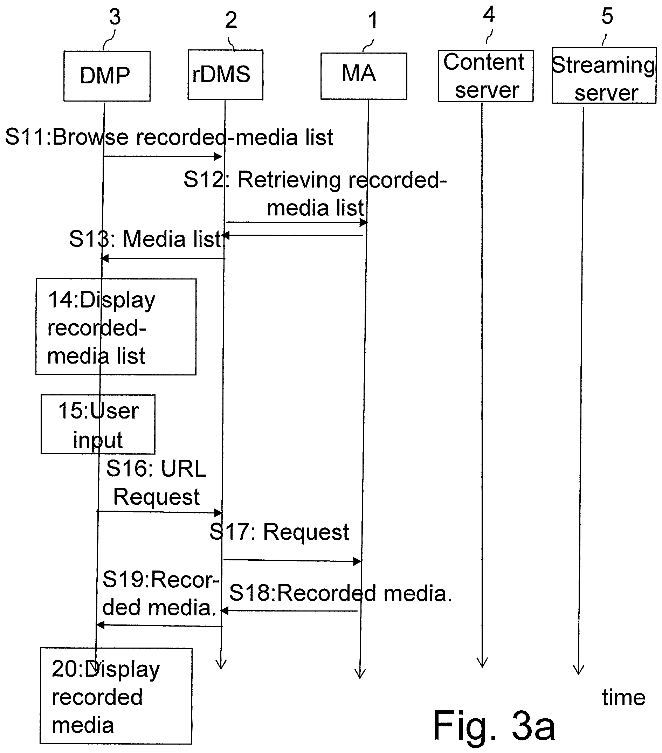

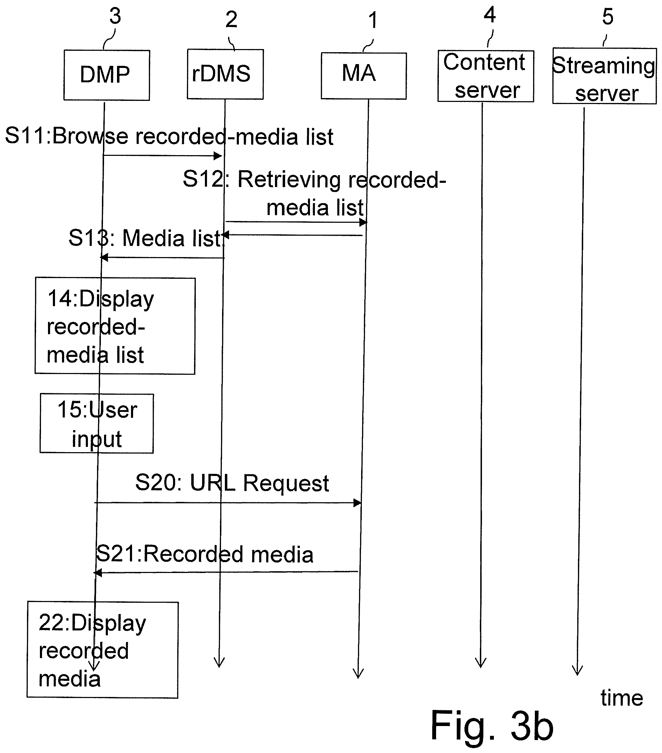

According to further embodiments, a media playing device retrieves and displays recorded broadcasted media content from the media aggregating node. Figure 3a and 3b are signalling diagrams illustrating two alternative exemplary embodiments of displaying a recorded media on a media playing device, and according to the embodiments illustrated in figures 3a and 3b, the local network is a DLNA network.

In figure 3a, the DMP 3 browses the rDMS 2 in order to find a list of recorded media content on the media aggregating node 1, in signal S11. In signal S12, the rDMS retrieves a recorded-media list from the media aggregating node, the list including associations to recorded media, the associations pointing to the rDMS, and forwards to the DMP as a recorded-media list, in signal S13. Next, the DMP displays the recorded media list to the user, in step 14, and receives a play-input from the user of selected recorded media to play, in step 15, and forwards a request with an association to the user-selected recorded media to the rDMS, in signal S16. In signal S17, the rDMS forwards a request with an association indicating a play-out of the user-selected media to the media aggregating node, and receives the recorded media from the media aggregating node in return. In signal S18, the rDMS forwards the recorded media to the DMP, which plays-out the media, in step S19.

According to an alternative embodiment, as illustrated in figure 3b, the DMP 3 is browsing the rDMS 2 for a list of recorded media content on the media aggregating node 1, in signal S11. In signal S12 the rDMS retrieves a recorded-media list from the media aggregating node, and forwards to the DMP as a recorded-media list in signal S13. The list comprises associations to the recorded media, wherein the associations are pointing directly to the media aggregating node, instead of to the rDMS. Next, the DMP displays the recorded media-list to the user, in step 14, and receives a play-input from a user regarding selected recorded media to play-out, in step 15. In signal S20, the DMP forwards a request with an association indicating a play-out of the user-selected media to the media aggregating node, and receives the recorded media in return, in signal S21. The DMP plays-out the recorded media to the user, in step 22.

Accordingly, in the embodiments when the local network is a DLNA network, the rDMS will act as a conventional DMS towards a browsing DMP. Thereby, a conventional DLNA/UPnP-communication may be used, requiring no additional commands between the devices.

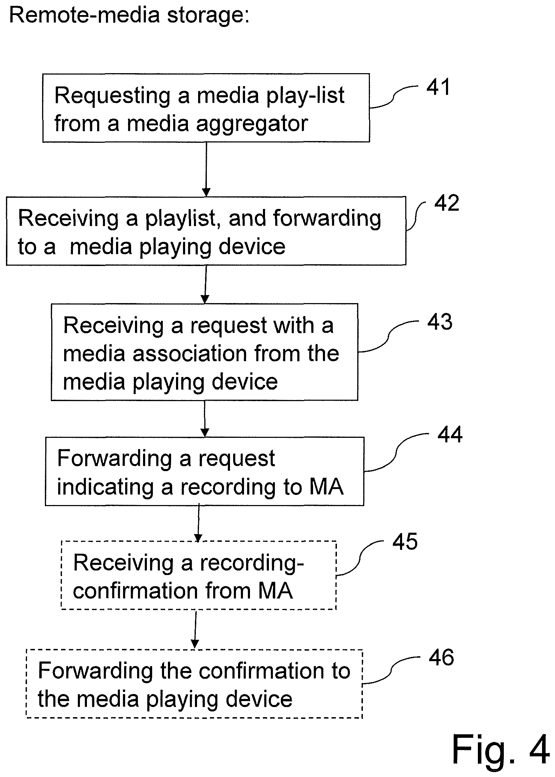

Figure 4 is a flow diagram illustrating an exemplary embodiment for a remote-media storing device of a local network, e.g. an rDMS of a DLNA network, of recording live broadcasted or multicasted media content on a media aggregating node of an external network, triggered by a media playing device of the local network, e.g. a DMP. In step 41, the rDMS requests a playlist of available media content from a media aggregating node, and receives the playlist, in step 42, and forwards to the browsing DMP for display as a recording playlist, the list comprising associations, e.g. URLs, to the media. In step 43, the rDMS receives a request with an association to a user-selected media from the DMP, and forwards to the media aggregating node, in step 44, as a request with an association indicating a recording of the user-selected media. Next, according to an exemplary embodiment, the rDMS receives a confirmation of the recording from the media aggregating node, in step 45, and forwards to the browsing DMP for display, in step 46.

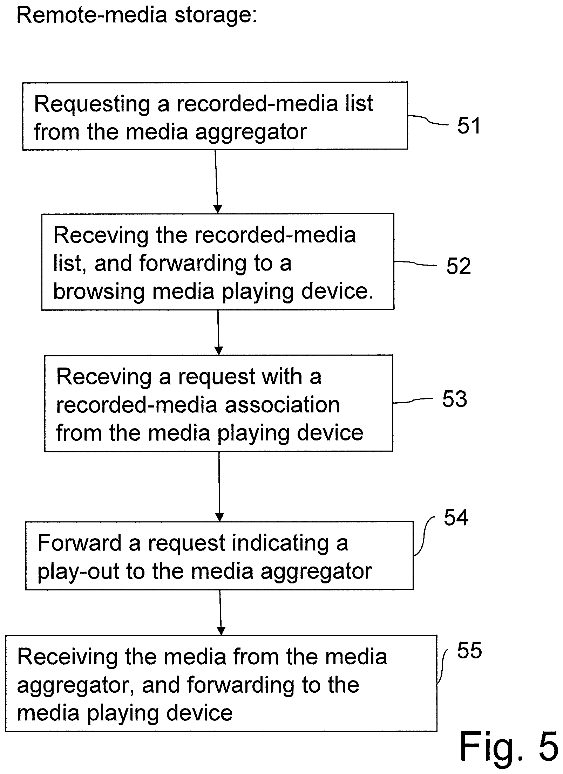

Figure 5 is a flow diagram illustrating a further exemplary embodiment for the remote-media storing device of playing-out the recorded media. In step 51, the rDMS requests a list of recorded media from the media aggregating node, and receives a list, in step 52, to be forwarded as recorded-media list to a browsing DMP for display, the list comprising associations to the recorded media. In step 53, the rDMS receives a request with an association to a user-selected media from the DMP, e.g. an URL Request, and forwards to the media aggregating node, in step 54, as a request with an association indicating a play-out of said media. In response, the rDMS receives the recorded media from the media aggregating node, and forwards to the browsing DMP for display, in step 55.

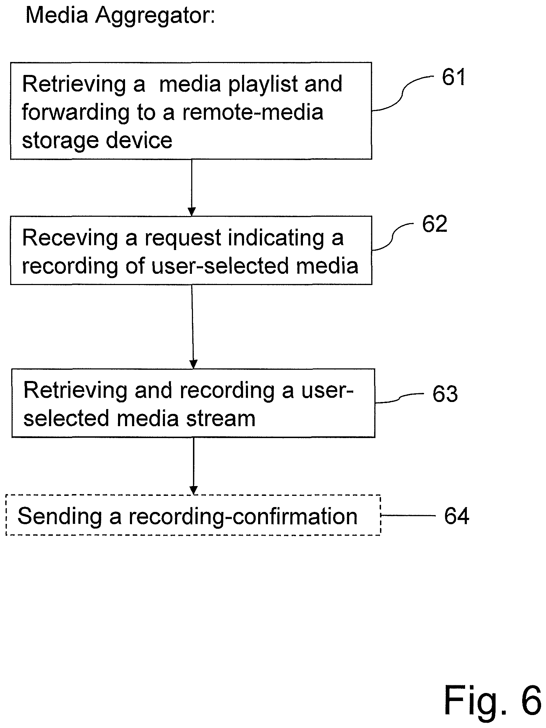

Figure 6 is a flow diagram illustrating an exemplary embodiment for a media aggregating node of an external network, connected to a remote-media storing device of a local network, e.g. an rDMS of a DLNA network, of recording broadcasted or multicasted media content, triggered by a media playing device of the local network, e.g. a DMP. In step 61, the media aggregating node retrieves a list of available media content from suitable media content data servers 4, and returns to the requesting rDMS, the list comprising associations to the media. In step 62, the media aggregating node receives a request with an association indication a recording of user-selected media from the rDMS, or according to an alternative embodiment, directly from the DMP, the media selected by the user in a play-input to the DMP. Since the association in the request, e.g. a link and/or reference information, indicates a recording of the media, the media aggregating node will interpret the received request as a request to record the media content. Therefore, in step 63, the media aggregating node retrieves a media stream from a streaming server, on the time of the broadcasting the media content, and records it. The time of the broadcasting may take place immediately after the media aggregating node receiving the recording command, or after a time period of e.g. a few hour or a few days. According to an exemplary embodiment, the media aggregating node sends a recording-confirmation message to the rDMS, in step 64, to be forwarded to the browsing DMP for display. Alternatively, the confirmation is sent directly to the DMP.

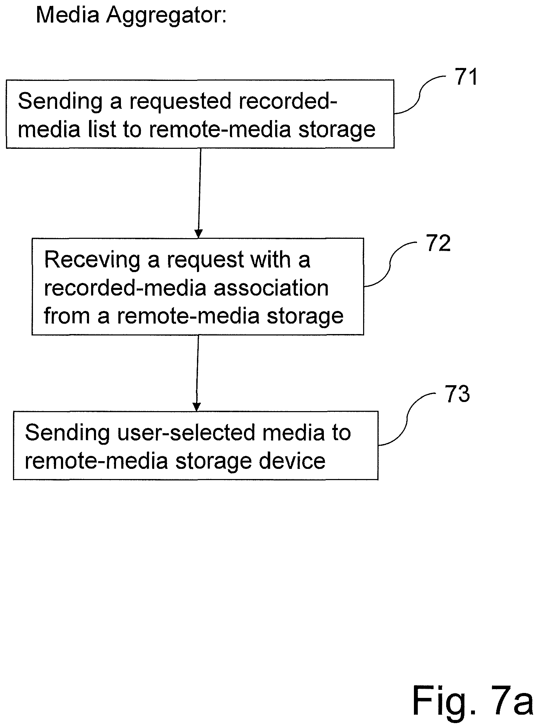

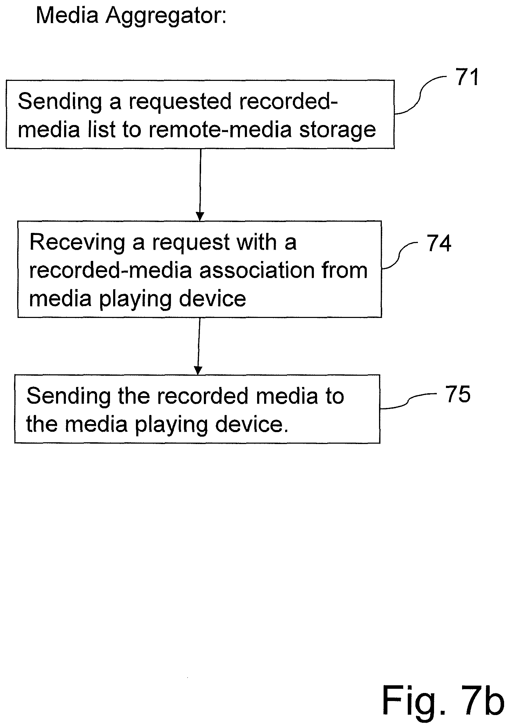

Figure 7a and 7b schematically illustrates the play-out of recorded media, according to two alternative embodiments. In step 71 in figure 7a the media aggregating node sends a requested list of recorded media to the rDMS, for display on a DMP, the list comprising associations to the recorded media, the associations pointing to the rDMS. In step 72, the media aggregating node receives a request with an association indicating a play-out of user-selected recorded media from the rDMS, the recorded media selected by the user in a play-input to a browsing DMP. Next, in step 73, the media aggregating node sends the recorded media to the rDMS, for display on the DMP.

According to the alternative embodiment, as illustrated in figure 7b, the list of recorded media includes associations pointing directly to the media aggregating node. Accordingly, in step 74, the media aggregating node receives a request with an association to user-selected recorded media directly from the DMP, and forwards the media to the DMP for play-out, in step 75.

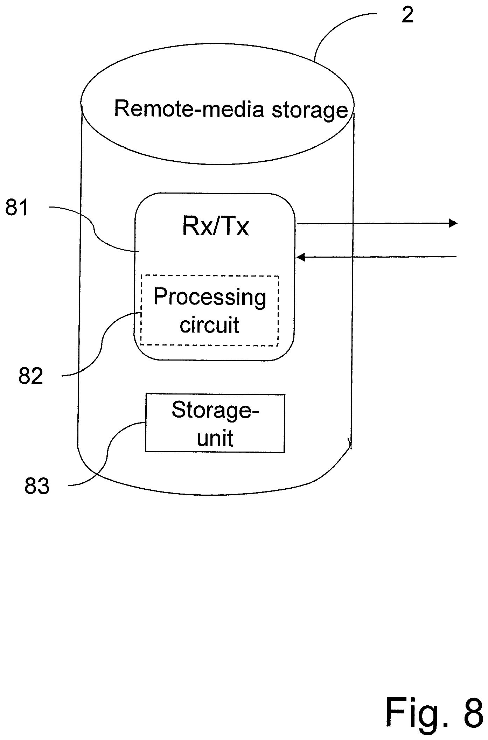

Figure 8 illustrates schematically an exemplary remote-media storing device 2 connectable to a local network, according to embodiments of this invention, e.g. an rDMS connectable to a DLNA network, the rDMS basically corresponding to a remotely (externally) connectable DMS. However, as explained above, an rDMS is presently not a standardized DLNA device. The rDMS is arranged to record broadcasted media content on a media aggregating node 1 of an external network, the recording being triggered by a media playing device of the local network, e.g. a DMP. The rDMS may be comprised in a gateway of the local network, or be connectable to the gateway. The rDMS is provided with a communication unit 81 comprising suitable transmitting/receiving units, and with processing circuits 82, and by means of the communication unit, as well as by other appropriate hardware, and by the software of the processing circuits, the rDMS is configured to request the media aggregating node to retrieve a media playlist, to receive the playlist, and to forward the playlist as a recording playlist to a browsing DMP. Further, the rDMS is configured to receive a request with an association to user-selected media from the DMP, and forward to the media aggregating node as a request with an association indicating a recording of said media. According to exemplary embodiments, the rDMS comprises an appropriate storage unit 83, and the rDMS may be a DLNA-compatible PC or a laptop.

According to a further exemplary embodiment of the remote-media storing device, it is configured to receive a confirmation of the recording from the media aggregating node, and to forward the confirmation to the browsing DMP for display.

According to a still further exemplary embodiment, it is configured to request the media aggregating node to send a recorded-media list, to receive the recorded-media list from the media aggregating node, and to forward to a browsing DMP for display, the list comprising associations to the recorded media, e.g. an URL. The remote-media storing device may be further configured to receive a request with an association to user-selected recorded media from the DMP, and to forward to the media aggregating node as a request with an association indicating a play-out of said media. It is also configured to receive the user-selected media from the media aggregating node, and forward to the browsing DMP for display.

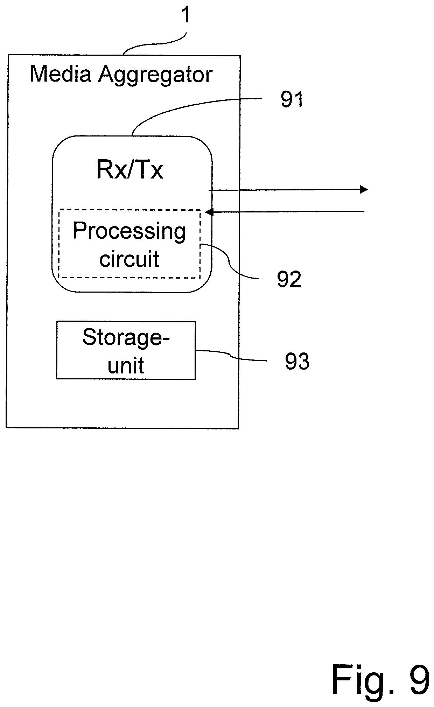

Figure 9 illustrates schematically a media aggregating node 1, according to exemplary embodiments of this invention.

As described above, a media aggregating node 1, e.g. a so-called Media Fabric connected to an external network, may also be connected to a local network, such as e.g. a DLNA network, via a gateway. The media aggregating node handles media content from media providers of the external network, outside the local network, as well as metadata from data servers of the external media providers. A media aggregating node is typically also responsible e.g. for authenticating a user, and for processing requests and presence messages.

The exemplary media aggregating node 1 illustrated in figure 9 comprises a communication unit 91 provided with suitable transmitters/receiver for communicating with a gateway 6 of the local network 7, as well as with media content data servers 4, and streaming servers 5. The media aggregating node is also provided with processing circuits 92, and by means of the communication unit, as well as by other appropriate hardware, and by the software of the processing circuits, the media aggregating node is configured to retrieve a media playlist, and to forward the playlist to an rDMS in response to a request, the playlist comprising associations to the media, and being forwarded as a recording playlist to a DMP browsing the rDMS. It is further configured to receive a request from the rDMS or, according to an alternative embodiment, directly from the DMP, the request including an association indicating a recording of user-selected media, e.g. an URL Request, the media selected by the user in a play-input to the DMP. The media aggregating node is also configured to retrieve a media stream from a streaming server, at the time of broadcasting of the media content, and to record the media stream. According to an exemplary embodiment, the media aggregating node is provided with an appropriate storage unit 93 for recorded media content.

According to a further exemplary embodiment, the media aggregating node is configured to send a confirmation of the recording the rDMS, to be forwarded to the DMP for display, or alternatively, to send the confirmation directly to the DMP.

According to a first alternative exemplary embodiment, it is configured to send a recorded media-list to the rDMS, in response to a request, wherein the recorded media-list is displayed on the DMP, the list comprising association to the recorded media on the list, the associations pointing to the rDMS. The media aggregating node is further configured to receive a request with an association indicating a play-out of a user-selected recorded media from the rDMS, the media selected by the user in a play-input to the DMP, and to send the user-selected media to the rDMS, to be forwarded to the DMP for display.

According to a second alternative exemplary embodiment, the media aggregating node is configured to send a recorded media-list to the rDMS, wherein the associations included in the list points directly to the media aggregating node. The media aggregating node is further configured to receive a request with an association to a user-selected recorded media directly from the DMP, and to send the media directly to the media playing device.

It should be noted that the remote-media storing device 3, as illustrated in figure 8, and the media aggregating node 1, as illustrated in figure 9, may be implemented by physical or logical entities using software functioning in conjunction with a programmed microprocessor or general purpose computer, and/or using an application specific integrated circuit (ASIC).

Further, the above mentioned and described embodiments are only given as examples and should not be limiting to the present invention. Other solutions, uses, objectives, and functions within the scope of the invention as claimed in the accompanying patent claims should be apparent for the person skilled in the art.

### ABBREVIATIONS

- DLNA: Digital Living Network Alliance
- DMC: Digital Media Controller
- DMP: Digital Media Player
- DMS: Digital Media Storage/Server
- rDMS: Remote-Media Storage/Server
- DMR: Digital Media Renderer
- UPnP: Universal Plug and Play
- MA: Media aggregating node
- URL: Uniform Resource Locator

## Claims

1. A method for a remote-media storing device (2) in a local network (7) of recording broadcasted/multicasted media content in a media aggregating node (1) located outside the local network, the recording being triggered by a media playing device (3) of the local network, the remote-media storing device being connected to the media aggregating node (1), the method comprising:
- requesting (41) the media aggregating node to retrieve a media playlist of available media;
- receiving (42) the playlist, and forwarding the playlist as a recording playlist to a browsing media playing device, the playlist comprising associations to the media;
- receiving (43) a request with an association to user-selected media from the media playing device, wherein the media is selected by a play-input to the media playing device, and
- forwarding (44) said request to the media aggregating node as a request with an association indicating a recording of said media, to retrieve and record the user-selected media at the time of broadcasting/multicasting of said media.

2. A method according to claim 1, further comprising:
- receiving (45) a confirmation of the recording from the media aggregating node; and
- forwarding (46) the confirmation to the media playing device for display.

3. A method according to claim 1 or 2, wherein a play-out of recorded media further comprises:
- requesting (51) the media aggregating node to send a recorded-media list;
- receiving (52) the recorded-media list, and forwarding the recorded-media list to a browsing media playing device, the list comprising associations to the recorded media;
- receiving (53) a request with an association to a user-selected recorded media from the media playing device, and forwarding (54) to the media aggregating node as a request with an association indicating a play-out of said media;
- receiving (55) the user-selected recorded media content from the media aggregating node, and forwarding to the media playing device.

4. A method for a media aggregating node (1) connected to a remote-media storing device (2) of a local network (7), and located outside said local network, of recording broadcasted/multicasted media, the recording being triggered by a media playing device (3) of the local network, the method comprising:
- retrieving (61) a media playlist of available media, and forwarding the playlist to the remote-media storing device, in response to a request, wherein the playlist is forwarded to a media playing device browsing the remote-media storing device, the playlist comprising associations to the media;
- receiving (62) a request with an association indicating a recording of user-selected media, wherein the media is selected from said forwarded playlist by a play-input to the media playing device;
- retrieving (63) and recording a user-selected media stream at the time of broadcasting.

5. A method according to claim 4, wherein the media playlist is retrieved from at least one media content server (4).

6. A method according to claim 4 or 5, wherein the user-selected live media stream is received from a streaming server (5) connected to a common network.

7. A remote-media storing device (2) connectable to a local network (7) and arranged to record broadcasted/multicasted media content on a media aggregating node (1) outside the local network, the recording being triggered by a media playing device (3) of the local network, the remote media storing device comprising a communication unit (81) and processing circuits (82), and being configured to:
- request the media aggregating node to retrieve a media playlist of available media;
- receive the playlist, and forwarding the playlist as a recording playlist to a browsing media playing device, the playlist comprising associations to the media;
- receive a request with an association to user-selected media from the media playing device (3), wherein the media is selected by a play-input to the media playing device; and
- forward said request to the media aggregating node as a request with an association indicating a recording of the media, to retrieve and record the user-selected media at the time of broadcasting/multicasting of said media.

8. A remote-media storing device, according to claim 7, comprised in a gateway (6) of the local network.

9. A remote-media storing device, according to claim 7, connectable to a gateway of the local network.

10. A remote-media storing device (2) according to any of the claims 7 - 9, further configured to:
- receive a confirmation of the recording from the media aggregating node (1);
- forward the confirmation to the browsing media playing device (3) for display.

11. A remote-media storing device according to any of the claims 7 - 10, further configured to:
- request the media aggregating node to send a recorded-media list;
- receive the recorded-media list, and forward the recorded media list to a browsing media playing device, the list comprising associations to the recorded media;
- receive a request with an association to user-selected recorded media from the media playing device, and forward to the media aggregating node as a request with an association indicating a play-out of said recorded media;
- receive the user-selected recorded media from the media aggregating node;
- forward the media on the media playing device for display.

12. A media aggregating node (1) arranged to record broadcasted/multicasted media, the recording being triggered by a media playing device (3) of a local network (7), and the media aggregating node being located outside the local network and connectable to a remote-media storing device (2) of the local network, the media aggregating node comprising a communication unit (91) and processing circuits (92), and being configured to:
- retrieve a media playlist of available media and forward to the remote-media storing device, in response to a request, wherein the playlist is forwarded as a recording playlist to a media playing device browsing the remote-media storing device, the playlist comprising associations to the media;
- receive a request with an association indicating a recording of user-selected media, the media selected from said forwarded playlist by a play-input to the media playing device;
- retrieve and record a user-selected media stream at the time of broadcasting.

13. A media aggregating node according to claim 12, further configured to retrieve the media playlist from at least one media content server (4).

14. A media aggregating node according to claim 12 or 13, further configured to retrieve the media stream from a streaming server (5) connected to a common network.

15. A media aggregating node according to any of the claims 12 - 14, arranged to receive the request from the remote-media storing device.

## Patentansprüche

1. Verfahren für eine Speicherungsvorrichtung für entfernte Medien (2) in einem lokalen Netzwerk (7) zur Aufzeichnung von ausgestrahltem/mehrfach übertragenem Medieninhalt in einem sich außerhalb des lokalen Netzwerks befindlichen Mediensammelknoten (1), wobei die Aufzeichnung durch eine Medienwiedergabevorrichtung (3) des lokalen Netzwerks ausgelöst wird, wobei die Speicherungsvorrichtung für entfernte Medien mit dem Mediensammelknoten (1) verbunden ist, wobei das Verfahren Folgendes umfasst:
- Anfordern (41) des Mediensammelknotens, eine Medienwiedergabeliste von verfügbaren Medien abzurufen;
- Empfangen (42) der Wiedergabeliste und Weiterleiten der Wiedergabeliste als eine Aufzeichnungswiedergabeliste an eine durchsuchende Medienwiedergabevorrichtung, wobei die Wiedergabeliste Zuordnungen zu den Medien umfasst;
- Empfangen (43) einer Anforderung mit einer Zuordnung zu vom Benutzer ausgesuchten Medien von der Medienwiedergabevorrichtung, wobei die Medien durch eine Wiedergabeeingabe an der Medienwiedergabevorrichtung ausgewählt werden, und
- Weiterleiten (44) der Anforderung an den Mediensammelknoten als eine Anforderung mit einer eine Aufzeichnung der Medien anzeigenden Zuordnung, um die vom Benutzer ausgewählten Medien zum Zeitpunkt des Ausstrahlens/Mehrfachübertragens der Medien zu empfangen und aufzuzeichnen.

2. Verfahren nach Anspruch 1, ferner umfassend:
- Empfangen (45) einer Bestätigung der Aufzeichnung vom Mediensammelknoten; und
- Weiterleiten (46) der Bestätigung an die Medienwiedergabevorrichtung zur Anzeige.

3. Verfahren nach Anspruch 1 oder 2, wobei eine Wiedergabe der aufgezeichneten Medien ferner Folgendes umfasst:
- Anfordern (51) des Mediensammelknotens, eine Liste aufgezeichneter Medien zu senden;
- Empfangen (52) der Liste aufgezeichneter Medien und Weiterleiten der Liste aufgezeichneter Medien an eine durchsuchende Medienwiedergabevorrichtung, wobei die Liste Zuordnungen zu den aufgezeichneten Medien umfasst;
- Empfangen (53) einer Anforderung mit einer Zuordnung zu vom Benutzer ausgesuchten Medien von der Medienwiedergabevorrichtung und Weiterleiten (54) an den Mediensammelknoten als eine Anforderung mit einer eine Wiedergabe der Medien anzeigenden Zuordnung;
- Empfangen (55) des vom Benutzer ausgewählten aufgezeichneten Medieninhalts vom Mediensammelknoten und Weiterleiten an die Medienwiedergabevorrichtung.

4. Verfahren für einen mit einer Speicherungsvorrichtung für entfernte Medien (2) eines lokalen Netzwerks (7) verbundenen und sich außerhalb des lokalen Netzwerks befindlichen Mediensammelknoten (1) zur Aufzeichnung ausgestrahlter/mehrfach übertragener Medien, wobei die Aufzeichnung durch eine Medienwiedergabevorrichtung (3) des lokalen Netzwerks ausgelöst wird, wobei das Verfahren Folgendes umfasst:
- Abrufen (61) einer Medienwiedergabeliste verfügbarer Medien und Weiterleiten der Wiedergabeliste zu einer Speicherungsvorrichtung für entfernte Medien als Reaktion auf eine Anforderung, wobei die Wiedergabeliste an eine die Speicherungsvorrichtung für entfernte Medien durchsuchende Medienwiedergabevorrichtung weitergeleitet wird, wobei die Wiedergabeliste Zuordnungen zu den Medien umfasst;
- Empfangen (62) einer Anforderung mit einer eine Aufzeichnung von vom Benutzer ausgewählten Medien anzeigenden Zuordnung, wobei die Medien aus der weitergeleiteten Wiedergabeliste durch eine Wiedergabeeingabe an der Medienwiedergabevorrichtung ausgewählt werden;
- Abrufen (63) und Aufzeichnen eines vom Benutzer ausgewählten Medienstreams zum Zeitpunkt des Ausstrahlens.

5. Verfahren nach Anspruch 4, wobei die Medienwiedergabeliste von mindestens einem Medieninhaltserver (4) abgerufen wird.

6. Verfahren nach Anspruch 4 oder 5, wobei der vom Benutzer ausgewählte Live-Medienstream von einem mit einem gemeinsamen Netzwerk verbundenen Streamingserver (5) empfangen wird.

7. Speicherungsvorrichtung für entfernte Medien (2), die mit einem lokalen Netzwerk (7) verbunden werden kann, und angeordnet ist, um ausgestrahlten/mehrfach übertragenen Medieninhalt auf einem Mediensammelknoten (1) außerhalb des lokalen Netzwerks aufzuzeichnen, wobei die Aufzeichnung durch eine Medienwiedergabevorrichtung (3) des lokalen Netzwerks ausgelöst wird, wobei die Speicherungsvorrichtung für entfernte Medien eine Kommunikationseinheit (81) und Verarbeitungsschaltungen (82) umfasst und ausgelegt ist zum:
- Anfordern des Mediensammelknotens, eine Medienwiedergabeliste verfügbarer Medien abzurufen;
- Empfangen der Wiedergabeliste und Weiterleiten der Wiedergabeliste als eine Aufzeichnungswiedergabeliste an eine durchsuchende Medienwiedergabevorrichtung, wobei die Wiedergabeliste Zuordnungen zu den Medien umfasst;
- Empfangen einer Anforderung mit einer Zuordnung zu vom Benutzer ausgewählten Medien von der Medienwiedergabevorrichtung (3), wobei die Medien durch eine Wiedergabeeingabe an der Medienwiedergabevorrichtung ausgewählt werden; und
- Weiterleiten der Anforderung an den Mediensammelknoten als eine Anforderung mit einer eine Aufzeichnung der Medien anzeigenden Zuordnung, um die vom Benutzer ausgewählten Medien zum Zeitpunkt des Ausstrahlens/Mehrfachübertragens der Medien abzurufen und aufzuzeichnen.

8. Speicherungsvorrichtung für entfernte Medien nach Anspruch 7, die in einem Gateway (6) des lokalen Netzwerks umfasst wird.

9. Speicherungsvorrichtung für entfernte Medien nach Anspruch 7, die mit einem Gateway des lokalen Netzwerks verbunden werden kann.

10. Speicherungsvorrichtung für entfernte Medien (2) nach einem der Ansprüche 7-9, ferner ausgelegt zum:
- Empfangen einer Bestätigung der Aufzeichnung vom Mediensammelknoten (1);
- Weiterleiten der Bestätigung an die durchsuchende Medienwiedergabevorrichtung (3) zur Anzeige.

11. Speicherungsvorrichtung für entfernte Medien gemäß einem der Ansprüche 7-10, ferner ausgelegt zum:
- Anfordern des Mediensammelknotens, eine Liste aufgezeichneter Medien zu senden;
- Empfangen der Liste aufgezeichneter Medien und Weiterleiten der Liste aufgezeichneter Medien an eine durchsuchende Medienwiedergabevorrichtung, wobei die Liste Zuordnungen zu den aufgezeichneten Medien umfasst;
- Empfangen einer Anforderung mit einer Zuordnung zu vom Benutzer ausgewählten aufgezeichneten Medien von der Medienwiedergabevorrichtung und Weiterleiten an den Mediensammelknoten als eine Anforderung mit einer eine Wiedergabe der aufgezeichneten Medien anzeigenden Zuordnung;
- Empfangen der vom Benutzer ausgewählten aufgezeichneten Medien vom Mediensammelknoten;
- Weiterleiten der Medien an die Medienwiedergabevorrichtung zur Anzeige.

12. Mediensammelknoten (1), der zur Aufzeichnung ausgestrahlter/mehrfach übertragener Medien angeordnet ist, wobei die Aufzeichnung durch eine Medienwiedergabevorrichtung (3) eines lokalen Netzwerks (7) ausgelöst wird, und wobei sich der Mediensammelknoten außerhalb des lokalen Netzwerks befindet und mit einer Speicherungsvorrichtung für entfernte Medien (2) des lokalen Netzwerks verbunden werden kann, wobei der Mediensammelknoten eine Kommunikationseinheit (91) und Verarbeitungsschaltungen (92) umfasst und ausgelegt ist zum:
- Abrufen einer Medienwiedergabeliste verfügbarer Medien und Weiterleiten an eine Speicherungsvorrichtung für entfernte Medien als Reaktion auf eine Anforderung, wobei die Wiedergabeliste als eine Aufzeichnungswiedergabeliste an eine die Speicherungsvorrichtung für entfernte Medien durchsuchende Medienwiedergabevorrichtung weitergeleitet wird, wobei die Wiedergabeliste Zuordnungen zu den Medien umfasst;
- Empfangen einer Anforderung mit einer eine Aufzeichnung von vom Benutzer ausgewählten Medien anzeigenden Zuordnung, wobei die Medien der weitergeleiteten Wiedergabeliste durch eine Wiedergabeeingabe an der Medienwiedergabevorrichtung ausgewählt werden;
- Abrufen und Aufzeichnen eines vom Benutzer ausgewählten Medienstreams zum Zeitpunkt des Ausstrahlens.

13. Mediensammelknoten nach Anspruch 12, ferner zum Abrufen der Medienwiedergabeliste von mindestens einem Medieninhaltserver (4) ausgelegt.

14. Mediensammelknoten nach Anspruch 12 oder 13, ferner zum Abrufen des Medienstreams von einem mit einem gemeinsamen Netzwerk verbundenen Streamingserver (5) ausgelegt.

15. Mediensammelknoten nach einem der Ansprüche 12-14, angeordnet zum Empfangen der Anforderung von der Speicherungsvorrichtung für entfernte Medien.

## Revendications

1. Procédé pour un dispositif de stockage multimédia distant (2) dans un réseau local (7) consistant à enregistrer un contenu multimédia diffusé de manière sélective/non sélective dans un noeud d'agrégation multimédia (1) situé en dehors du réseau local, l'enregistrement étant déclenché par un dispositif de lecture multimédia (3) du réseau local, le dispositif de stockage multimédia distant étant connecté au noeud d'agrégation multimédia (1), le procédé comprenant :
- la demande (41) au noeud d'agrégation multimédia de récupérer une liste d'écoute de contenus multimédia disponibles ;
- la réception (42) de la liste d'écoute, et la retransmission de la liste d'écoute en tant que liste d'écoute d'enregistrement à un dispositif de lecture multimédia de recherche au hasard, la liste d'écoute comprenant des associations vers le contenu multimédia ;
- la réception (43) d'une demande avec une association vers un contenu multimédia choisi par l'utilisateur en provenance du dispositif de lecture multimédia, dans lequel le contenu multimédia est choisi par le biais d'une entrée de lecture dans le dispositif de lecture multimédia, et
- la retransmission (44) de ladite demande au noeud d'agrégation multimédia en tant que demande avec une association indiquant un enregistrement dudit contenu multimédia, de récupérer et d'enregistrer le contenu multimédia choisi par l'utilisateur au moment de la diffusion sélective/non sélective dudit contenu multimédia.

2. Procédé selon la revendication 1, comprenant en outre :
- la réception (45) d'une confirmation de l'enregistrement en provenance du noeud d'agrégation multimédia ; et
- la retransmission (46) de la confirmation au dispositif de lecture multimédia à des fins d'affichage.

3. Procédé selon les revendications 1 ou 2, dans lequel une lecture d'un contenu multimédia enregistré comprend en outre :
- la demande (51) au noeud d'agrégation multimédia d'envoyer une liste de contenus multimédia enregistrés ;
- la réception (52) de la liste de contenus multimédia enregistrés, et la retransmission de la liste de contenus multimédia enregistrés à un dispositif de lecture multimédia de recherche au hasard, la liste comprenant des associations vers les contenus multimédia enregistrés ;
- la réception (53) d'une demande avec une association vers un contenu multimédia enregistré choisi par l'utilisateur en provenance du dispositif de lecture multimédia, et sa retransmission (54) au noeud d'agrégation multimédia en tant que demande avec une association indiquant une lecture dudit contenu multimédia ;
- la réception (55) du contenu multimédia enregistré choisi par l'utilisateur en provenance du noeud d'agrégation multimédia, et sa retransmission au dispositif de lecture multimédia.

4. Procédé pour un noeud d'agrégation multimédia (1) connecté à un dispositif de stockage multimédia distant (2) d'un réseau local (7), et situé en dehors dudit réseau local, consistant à enregistrer un contenu multimédia diffusé de manière sélective/non sélective, l'enregistrement étant déclenché par un dispositif de lecture multimédia (3) du réseau local, le procédé comprenant :
- la récupération (61) d'une liste d'écoute de contenus multimédia disponibles, et la retransmission de la liste d'écoute au dispositif de stockage multimédia distant, en réponse à une demande, dans lequel la liste d'écoute est retransmise à un dispositif de lecture multimédia recherchant au hasard dans le dispositif de stockage multimédia distant, la liste d'écoute comprenant des associations vers le contenu multimédia ;
- la réception (62) d'une demande avec une association indiquant un enregistrement d'un contenu multimédia choisi par l'utilisateur, dans lequel le contenu multimédia est choisi par le biais d'une entrée de lecture dans le dispositif de lecture multimédia ;
- la récupération (63) et l'enregistrement d'un flux multimédia choisi par l'utilisateur au moment de la diffusion sélective.

5. Procédé selon la revendication 4, dans lequel la liste d'écoute multimédia est récupérée depuis au moins un serveur de contenus multimédia (4).

6. Procédé selon les revendications 4 ou 5, dans lequel le flux multimédia en direct choisi par l'utilisateur est reçu d'un serveur de diffusion en continu (5) connecté à un réseau commun.

7. Dispositif de stockage multimédia distant (2) pouvant être connecté à un réseau local (7) et agencé pour enregistrer un contenu multimédia diffusé de manière sélective/non sélective sur un noeud d'agrégation multimédia (1) en dehors du réseau local, l'enregistrement étant déclenché par un dispositif de lecture multimédia (3) du réseau local, le dispositif de stockage multimédia distant comprenant une unité de communication (81) et des circuits de traitement (82), et étant configuré pour :
- demander au noeud d'agrégation multimédia de récupérer une liste d'écoute de contenus multimédia disponibles ;
- recevoir la liste d'écoute, et retransmettre la liste d'écoute en tant que liste d'écoute d'enregistrement à un dispositif de lecture multimédia de recherche au hasard, la liste d'écoute comprenant des associations vers le contenu multimédia ;
- recevoir une demande avec une association vers un contenu multimédia choisi par l'utilisateur en provenance du dispositif de lecture multimédia (3), dans lequel le contenu multimédia est choisi par le biais d'une entrée de lecture dans le dispositif de lecture multimédia ; et
- retransmettre ladite demande au noeud d'agrégation multimédia en tant que demande avec une association indiquant un enregistrement du contenu multimédia, de récupérer et d'enregistrer le contenu multimédia choisi par l'utilisateur au moment de la diffusion sélective/non sélective dudit contenu multimédia.

8. Dispositif de stockage multimédia distant selon la revendication 7, compris dans une passerelle (6) du réseau local.

9. Dispositif de stockage multimédia distant selon la revendication 7, pouvant être connecté à une passerelle du réseau local.

10. Dispositif de stockage multimédia distant (2) selon l'une quelconque des revendications 7 à 9, configuré en outre pour :
- recevoir une confirmation de l'enregistrement en provenance du noeud d'agrégation multimédia (1) ;
- retransmettre la confirmation au dispositif de lecture multimédia de recherche au hasard (3) à des fins d'affichage.

11. Dispositif de stockage multimédia distant selon l'une quelconque des revendications 7 à 10, configuré en outre pour :
- demander au noeud d'agrégation multimédia d'envoyer une liste de contenus multimédia enregistrés ;
- recevoir la liste de contenus multimédia enregistrés, et retransmettre la liste de contenus multimédia enregistrés à un dispositif de lecture multimédia de recherche au hasard, la liste comprenant des associations vers les contenus multimédia enregistrés ;
- recevoir une demande avec une association vers un contenu multimédia enregistré choisi par l'utilisateur en provenance du dispositif de lecture multimédia, et la retransmettre au noeud d'agrégation multimédia en tant que demande avec une association indiquant une lecture dudit contenu multimédia enregistré ;
- recevoir le contenu multimédia enregistré choisi par l'utilisateur en provenance du noeud d'agrégation multimédia ;
- retransmettre le contenu multimédia sur le dispositif de lecture multimédia à des fins d'affichage.

12. Noeud d'agrégation multimédia (1) agencé pour enregistrer un contenu multimédia diffusé de manière sélective/non sélective, l'enregistrement étant déclenché par un dispositif de lecture multimédia (3) d'un réseau local (7), et le noeud d'agrégation multimédia étant situé en dehors du réseau local et pouvant être connecté à un dispositif de stockage multimédia distant (2) du réseau local, le noeud d'agrégation multimédia comprenant une unité de communication (91) et des circuits de traitement (92), et étant configuré pour :
- récupérer une liste d'écoute de contenus multimédia disponibles et la retransmettre au dispositif de stockage multimédia distant, en réponse à une demande, dans lequel la liste d'écoute est retransmise en tant que liste d'écoute d'enregistrement à un dispositif de lecture multimédia recherchant au hasard dans le dispositif de stockage multimédia distant, la liste d'écoute comprenant des associations vers le contenu multimédia ;
- recevoir une demande avec une association indiquant un enregistrement d'un contenu multimédia choisi par l'utilisateur, le contenu multimédia étant choisi dans ladite liste d'écoute retransmise par le biais d'une entrée de lecture dans le dispositif de lecture multimédia ;
- récupérer et enregistrer un flux multimédia choisi par l'utilisateur au moment de la diffusion sélective.

13. Noeud d'agrégation multimédia selon la revendication 12, configuré en outre pour récupérer la liste d'écoute multimédia depuis au moins un serveur de contenus multimédia (4).

14. Noeud d'agrégation multimédia selon les revendications 12 ou 13, configuré en outre pour récupérer le flux multimédia depuis un serveur de diffusion en continu (5) connecté à un réseau commun.

15. Noeud d'agrégation multimédia selon l'une quelconque des revendications 12 à 14, agencé pour recevoir la demande en provenance du dispositif de stockage multimédia distant.
